# EUROPEAN PATENT APPLICATION

(11) **EP 4 497 984 A1**
(43) Date of publication of application: **29.01.2025**
(21) Application number: 23187549.3
(22) Date of filing: 25.07.2023
(51) Int. Cl.: F16L 9/04, F28F 1/00

(54) **A FLAT TUBE FOR A HEAT EXCHANGER**

(71) Applicant: VALEO SYSTEMES THERMIQUES, 78320 Le Mesnil Saint-Denis (FR)
(72) Inventor: WIDZYK, Lukasz, 32 050 Skawina (PL); BUREK, Dariusz, 32 050 Skawina (PL); STRUS, Tomasz, 32 050 Skawina (PL); KOTARBA, Jerzy, 32 050 Skawina (PL)
(74) Representative: Valeo Systèmes Thermiques

(57) **Abstract**

The object of the invention is, among others a flat tube (1) for a heat exchanger for a flow of a fluid therein, the flat tube (1) having open ends on both sides and extending along its longitudinal axis (L1), the flat tube (1) further comprising: a first wall (3), a second wall (4) parallel to the first wall (3), said walls (3, 4) being substantially flat, two complementary side wall portions (6) joining said first and second walls (3, 4) together to form a hollow profile of the tube (1), wherein the flat tube (1) further comprises a first region (100), called nominal region (100) comprising a first thickness of the wall (T1), and at least one second region (200), called thin region (200) comprising a second thickness of the wall (T2), wherein the regions (100, 200) extend along the longitudinal axis (L1) and the thicknesses (T1, T1) are measured perpendicularly to the longitudinal axis (L1).

## Description

### FIELD OF THE INVENTION

The invention relates to a flat tube. In particular, the invention relates to a flat tube for a heat exchanger.

### BACKGROUND OF THE INVENTION

In general, heat exchangers conventionally comprise a core bundle of tubes and two collector tubes such as manifolds through which the ends of the tubes of the core bundle of tubes pass and which are capped by fluid distribution box covers. There may be inserts placed between the tubes of said core in order to improve the exchange of heat.

There are two main technologies employed in the manufacture of these tubes. Either extrusion, which gives rise to a high cost (specific dies for each type of tube), or bending, offering different advantages. In the latter distance, the tubes used are produced by bending a metal strip over on itself.

Heat exchanger tubes may be subjected to numerous stresses such as so-called "thermal shock" which is associated with rapid change of temperature of fluid entering the heat exchanger.

Heat exchanger tubes are therefore subjected not only to external stresses (e.g. stone impact), but also internal ones.

Sufficient material strength at tube level has to be guaranteed.

One known solution is to allow the tube to withstand such an impact in order to avoid any leak of fluid, or to withstand the internal stresses, by locally increasing the thickness of the wall of the tube in the case of an extruded tube.

However, in the case of a bent tube, the tube cannot be reinforced by simply increasing the thickness of material as it can in the case of an extruded tube.

As far as bent tubes go, there is, for example, a known solution whereby the open ends of the tube receive inserts increasing the thickness of material at terminal ends of the tube. A disadvantage lies in the fact that the inserts may impact flow through the tube, they are in fact additional components which require precise brazing, they increase overall cost of the heat exchanger and they do not guarantee robustness against internal stress.

Another known solution may be providing a gap between the tube legs and the bottom portion of the tube. The tube legs may be separated from the bottom portion of the tube mechanically after the tube is brazed. This requires special tooling, such as knifes which may get dull after many repetitions of this process. Further, the process itself requires a lot of precision, so that the tubes do not get damaged.

Thus, it would be desired to provide a solution which would overcome latter disadvantages or the solution which would provide alternative to known tube flexibility improvements. It is also desirable to provide a tube which would withstand internal stress, preferably without increasing the overall cost of the heat exchanger.

### SUMMARY OF THE INVENTION

The object of the invention is, among others a flat tube for a heat exchanger for a flow of a fluid therein, the flat tube having open ends on both sides and extending along its longitudinal axis, the flat tube further comprising: a first wall, a second wall parallel to the first wall, said walls being substantially flat, two complementary side wall portions joining said first and second walls together to form a hollow profile of the tube, wherein the flat tube further comprises a first region, called nominal region comprising a first thickness of the wall, and at least one second region, called thin region comprising a second thickness of the wall, wherein the regions extend along the longitudinal axis and the thicknesses are measured perpendicularly to the longitudinal axis.

Advantageously, each of the walls comprises first, second and side inner face, and an outer face respectively, wherein the inner faces are associated with a hollow space of the tube and the outer faces are associated with an outer space of the tube.

Advantageously, the second thickness is smaller than the first thickness, wherein the thickness is measured as the distance between the respective inner faces and outer faces.

Advantageously, the second region extends from the open end of the tube and the first region extends form the opposite open end of the tube, the regions extending along the longitudinal axis.

Advantageously, a portion of the first region extends from one open end of the tube, the other portion of the first region extends form the other open end of the tube and the second region is located between said first regions.

Advantageously, a portion of the second region extends from one open end of the tube, the other portion of the second region extends form the other open end of the tube and the first region is located between said second regions.

Advantageously, the total surface of the first region is greater than the total surface of the second region. Advantageously, a portion of the first region extends from one open end of the tube, the other portion of the first region extends form the other open end of the tube, wherein said tube comprises at least two second regions arranged alternately with first region.

Advantageously, a portion of the second region extends from one open end of the tube, the other portion of the second region extends form the other open end of the tube, wherein said tube comprises at least two first regions arranged alternately with second region.

Advantageously, the total surface of the first region is greater than the total surface of the second region.

Advantageously, the first region is greater than the second region.

Another object of the invention is a heat exchanger for a heat exchange between the first fluid and the second fluid comprising at least one flat tube according to any of the preceding claims.

Advantageously, the heat exchanger further comprises a first manifold and a second manifold, the manifolds being configured to receive at least one flat tube, the inlet allowing ingress of the first fluid into the heat exchanger, and an outlet allowing egress of the first fluid from the heat exchanger.

Advantageously, the heat exchanger further comprises standard tubes having fixed wall thickness.

Advantageously, the plurality of flat tubes and standard tubes are stacked together between manifolds, so that the flat tubes are located closer to the inlet than the standard tubes.

The flat tube allows to reduce the mechanical associated with tube expansion (and contraction) stress at desired location of the tube. This allows the tube to change its shape at the desired location, significantly lowering the risk of leakage. The flexibility of the tube does not decrease its robustness- it's the contrary- by making the tube flexible the risk of fracturing the walls of the tubes during rapid change of the temperature of the fluid flowing therein is reduced to minimum, as the tube can move freely.

### BRIEF DESCRITPTION OF DRAWINGS

Examples of the invention will be apparent from and described in detail with reference to the accompanying drawings, in which:
Fig. 1 shows a perspective view of prior art flat tube with a seam in the middle.
Fig. 2 shows a perspective view of other prior art flat tube with a seam on the side.
Fig. 3 shows a cross section of the flat tube from any of the Figs 1 or 2.
Fig. 4 shows a cross section of the flat tube according to one aspect of the invention.
Fig. 5 shows a cross section of the flat tube according to other aspect of the invention.
Fig. 6 shows a top schematic view of the flat tube showing a first schematic arrangement of the thin region with respect to the nominal section.
Fig. 7 shows a top schematic view of the flat tube showing a second schematic arrangement of the thin region with respect to the nominal section.
Fig. 8 shows a top schematic view of the flat tube showing a third schematic arrangement of the thin region with respect to the nominal section.

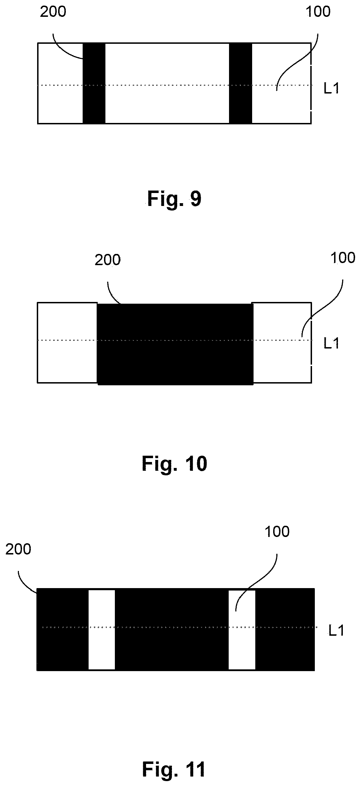

Fig. 9 shows a top schematic view of the flat tube showing a fourth schematic arrangement of the thin region with respect to the nominal section.
Fig. 10 shows a top schematic view of the flat tube showing a fifth schematic arrangement of the thin region with respect to the nominal section.
Fig. 11 shows a top schematic view of the flat tube showing a sixth schematic arrangement of the thin region with respect to the nominal section.

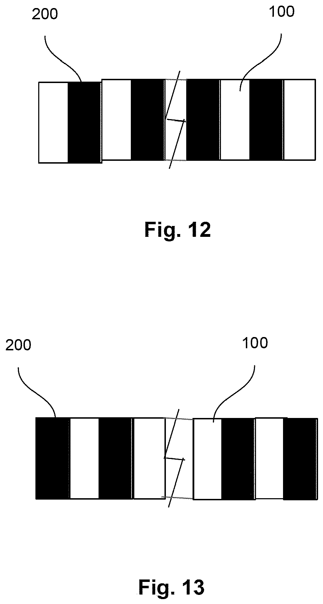

Fig. 12 shows a top schematic view of the flat tube showing a seventh schematic arrangement of the thin region with respect to the nominal section.
Fig. 13 shows a top schematic view of the flat tube showing a eight schematic arrangement of the thin region with respect to the nominal section.
Fig. 14 shows a heat exchanger comprising at least one flat tube.

### DETAILED DESCRIPTION OF EMBODIMENTS

The invention relates to a flat tube 1. The flat tube 1 may be adapted for operation in a heat exchanger 1000 for a flow of a fluid therein. For example, the heat exchanger 1000 may be a radiator and the fluid circulating therein may be a coolant. In another example, the heat exchanger 1000 may be for example a gas cooler or a chiller, and the flat tube 1 may be adapted for circulation of refrigerant under high pressure by being extruded. Other heat exchangers in which the flat tube 1 may be applied are also envisaged.

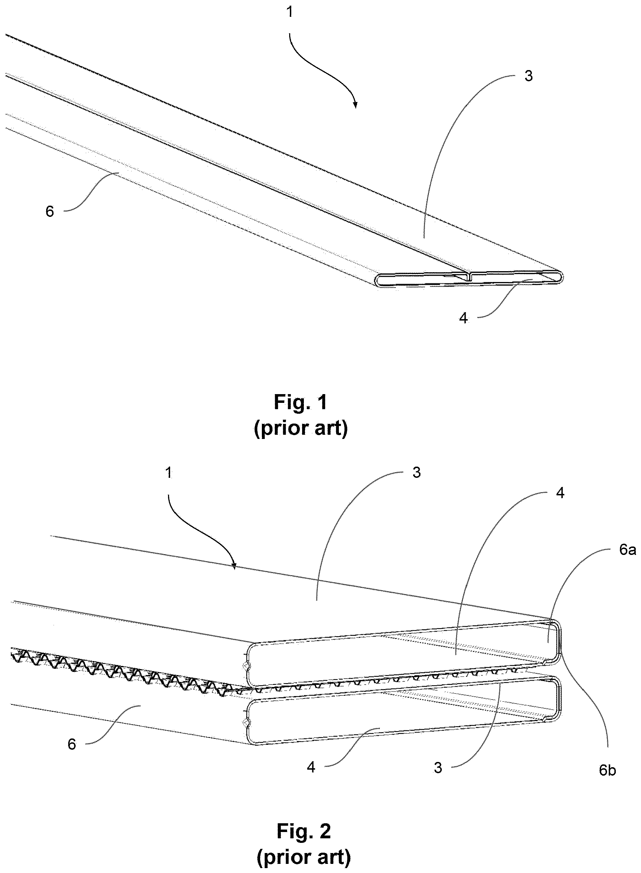

Figures 1-3 shows the prior art flat tube 1. The flat tube 1 may be formed by bending a sheet metal strip along its length. Term "metal strip" refers to a metallic sheet comprising two longer sides which may be further referred to as "longitudinal edges" and two substantially shorter sides, substantially parallel to said longer sides. The metal strip may be made of, for example, aluminum, yet other materials are also envisaged. The metal strip may be bent along its longitudinal edges to form a closed profile. Thus, the flat tube 1 may extend along its longitudinal axis L1. In other words, the flat tube 1 may comprise its axis of elongation.

The walls 3, 4 may be substantially flat. In order to form a closed profile, the flat tube 1 may further comprise two complementary side wall portions 6 joining said first and second walls 3, 4 together. Each wall 3, 4, 6 may comprise an inner face and an outer face.

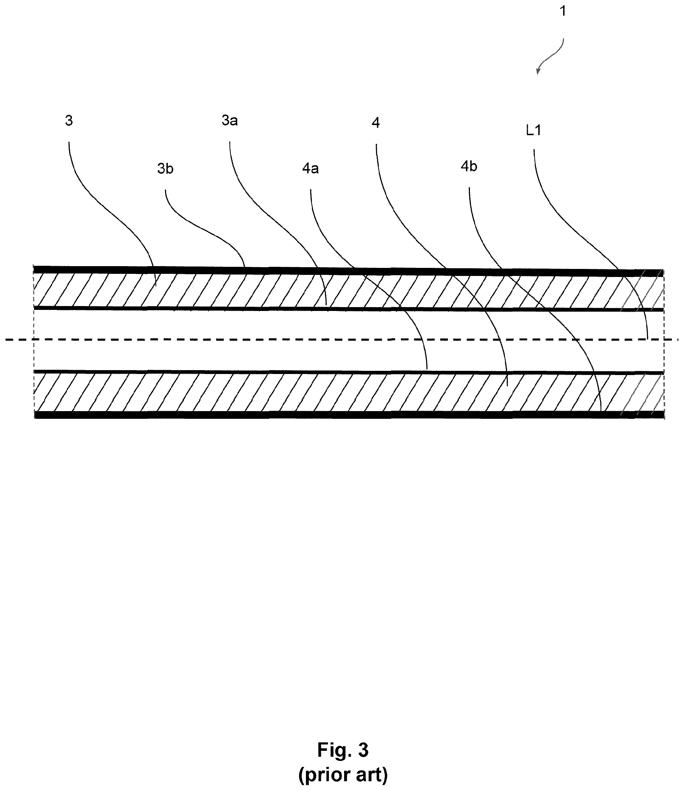

The flat tube 1 may further comprise a first wall 3 and a second wall 4 parallel to the first wall 3, wherein said walls 3, 4 are formed after bending the metal strip. As shown in Figs 3-5, ach of the walls 3, 4, 6 may comprise first, second and side inner face 3a, 4a, 6a, and an outer face 3b, 4b, 6b respectively, wherein the inner faces are associated with a hollow space of the tube 1 and the outer faces 3b, 4b, 6b are associated with an outer space of the tube 1. In other words, the term inner refers to the side of the wall 3, 4, 6 which faces the hollow portion of the tube 1, whereas the outer face refers to the portion of the tube being located further from the hollow portion of the tube 1 when compared to inner face of the tube 1.

In order to provide a proper sealing of the flat tube 1, the first fall 3 may comprise a seam (not shown). Seam is proposed mainly in so-called folded tubes. Extruded tubes need no seam for obvious reasons. The seam may extend along the longitudinal axis of the flat tube 1 so that juxtaposed longitudinal edges of the metal strip join together in parallel manner towards the second wall 4 to form the closed profile of the tube 1. In other words, in the process of bending the metal strip to form the flat tube 1, the longitudinal edges are bent inwardly at substantially right angle, so that they protrude towards the second wall 4 and they are in contact with each other substantially from the first wall 3 to the second wall 4.

Lack of flexibility combined with high pressure and temperature of the coolant may significantly reduce the robustness of the flat tube 1.

For this reason, the flat tube 1 may further comprise a first region 100, called nominal region 100. Nominal region 100 is portion of the flat tube 1 which is of standard, or predetermined thickness. Nominal region 100 is not intended to be flexible. Further, the flat tube may comprise at least one second region 200, called thin region 200.

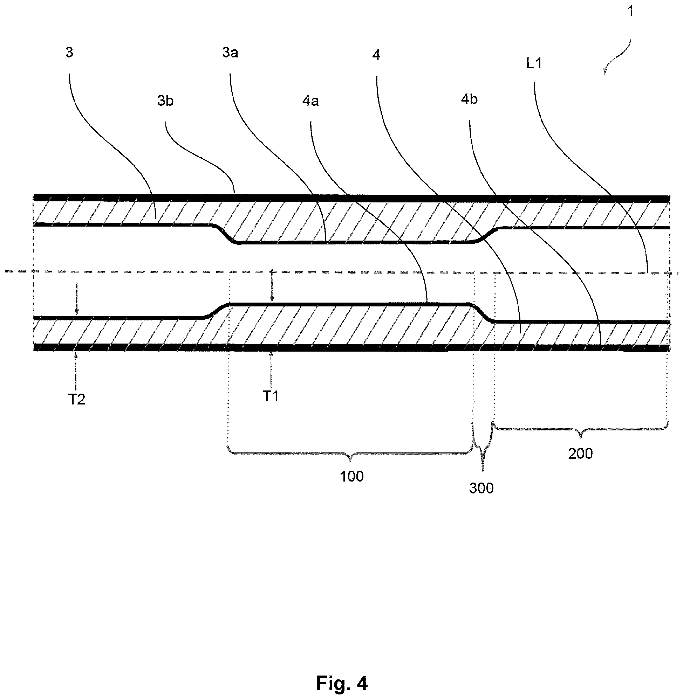

As shown, for example, in Fig. 4, the flat tube 1 may comprise few dimensions which can be determined and which may be characteristic for each of the regions 100, 200.

Naturally, the flat tube 1 for a heat exchanger is configured for a flow of a fluid therein. The flat tube 1 comprises open ends on both sides. The flat tube 1 extends along its longitudinal axis L1. The longitudinal axis L1 may be representative for each individual tube 1 or it can be common for group of tubes 1, if said tubes are arranged in a stack and parallel to each-other.

The nominal region 100 may comprise a first thickness of the wall T1, whereas the thin region 200 may comprise a second thickness of the wall T2. The first thickness of the wall T1 and the second thickness of the wall T2 are measured as the distance between the inner face and the outer face the first wall 3 and the second wall 4, respectively. The thickness is thus measured in a direction perpendicular to the longitudinal axis L1. Consequently, the thickness is measured in perpendicular with respect to the surface of each walls of the nominal region 100 and/or thin region 200. The first thickness of the wall T1 and the second thickness of the wall T2 apply to all walls of the nominal region 100 and the thin region respectively 200, i.e. to the first wall 3, the second wall 4 and the side wall portions 6 since all of them are created from the same portion of the metal strip.

However, one could imagine and embodiment in which the first thickness T1 is defined as a median thickness of the walls 3, 4, 6 of the nominal region, and the second thickness is defined as the median thickness of the walls 3, 4, 6 of the thin region 200. In such embodiment, the individual walls comprised in the same region could be of different thicknesses.

The thin region 200 allows the flat tube 1 to be bent in a predetermined spot and in a desired way, thus lowering the risk of leakage from the heat exchanger 1000. The several possible locations of the thin region are discussed in further paragraphs, yet one should be aware that the invention is not limited only to these embodiments, but also to variations thereof.

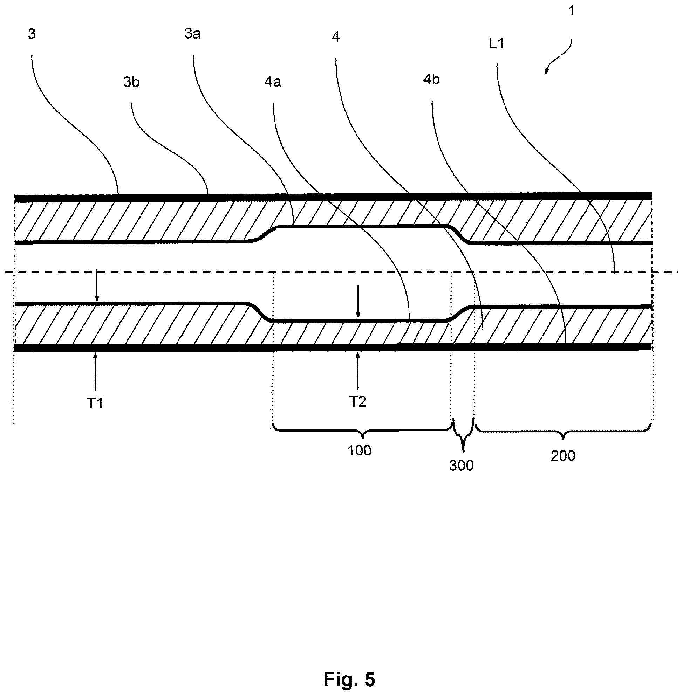

As shown in Figs 4 and 5, the flat tube 1 may comprise a third zone 300, called intermediate zone 300. The intermediate zone 300 connects a thin zone 200 with the nominal zone 100. In the Figures, the intermediate zone 300 is presented as a slight slope connecting thin zone 200 and the nominal zone 100. However, other types of a third zone 300 are also envisaged.

As shown in Figures 4 and 5, the second thickness T2 is smaller than the first thickness T1, wherein the thickness is measured as the distance between the respective inner faces 3a, 4a, 6a and outer faces 3b, 4b, 6a.

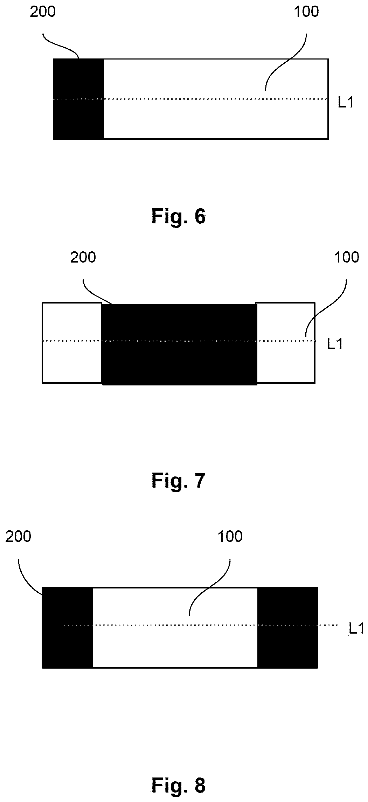

In one embodiment, shown for example in Fig. 6, the second region 200 extends from the open end of the tube 1 and the first region 100 extends form the opposite open end of the tube 1, the regions 100, 200 extending along the longitudinal axis L1. In this embodiment, the second region 200 may be smaller than the first region 100, with respect to the longitudinal axis L1. Alternatively, the second region 200 may be bigger that the first region, with respect to the longitudinal axis L1.

In different embodiment, the flat tube 1 may comprise three zones of material thickness, i.e. each subsequent thickness zone is different compared to preceding one.

Thus, in one of the embodiments, wherein a portion of the first region 100 extends from one open end of the tube 1, the other portion of the first region 100 extends form the other open end of the tube 1 and the second region 200 is located between said first regions 100. It is to be noted that the second regions 200 may be of the same thickness T2.

Alternatively, wherein a portion of the second region 200 extends from one open end of the tube 1, the other portion of the second region 200 extends form the other open end of the tube 1 and the first region 100 is located between said second regions 200.

Each of the first and the second regions 100, 200 may occupy some part of the total surface of the tube 1. The total surface of the tube may be understood as, for example, the total surface of the outer walls. Therefore, in the examples presented above, the total surface of the first region 100 may be greater that the total surface of the second region 200. Alternatively, the total surface of the first region 100 may be smaller than the total surface of the second region 200.

As shown in another example, the portion of the first region 100 extends from one open end of the tube 1, the other portion of the first region 100 extends form the other open end of the tube 1, wherein said tube 1 comprises at least two second regions 200 arranged alternately with first region 100. In other words, the second region 200 is in the median portion of the tube 1, in-between the first regions 100.

Alternatively to the example described above, a portion of the second region 200 extends from one open end of the tube 1, the other portion of the second region 200 extends form the other open end of the tube 1, wherein said tube 1 comprises at least two first regions 100 arranged alternately with second region 200. In other words, the first region is in the median portion of the tube 1, in-between the second regions 200.

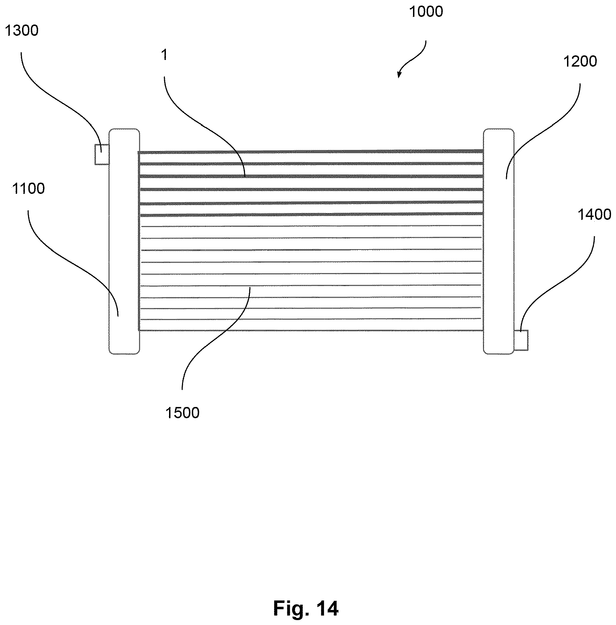

The invention also relates to a heat exchanger 1000 for a heat exchange between the first fluid and the second fluid comprising at least one flat tube 1 described in previous paragraphs. Said heat exchanger is depicted in Fig. 14.

As shown in Fig. 14, the flat tube 1 may be suitable for a heat exchanger 1000. In other words, the heat exchanger 1000 may comprise at least one flat tube 1.

The heat exchanger 1000 may further comprise a first manifold 1100 and a second manifold 1200. The manifolds 1100, 1200 may be configured to receive at least one flat tube 1.

The heat exchanger 1000 may further comprise an inlet 1300 allowing ingress of the first fluid into the heat exchanger 1000, and an outlet 1400 allowing egress of the first fluid from the heat exchanger 1000.

The heat exchanger 1000 may further comprise standard tubes 1500 having fixed wall thickness. Fixed wall thickness refers to the tubes 1500 having constant hydraulic diameter along its longitudinal axis L1. In other words, the standard tubes have fixed distance between respective inner faces and the outer faces of the tube, so that one cannot distinguish thin region in the tube 1500.

In such a heat exchanger 1000, the plurality of flat tubes 1 and standard tubes 1500 may be stacked together between manifolds 1100, 1200, so that the flat tubes 1 are located closer to the inlet 1300 than the standard tubes 1400. In Fig. 14 the stack of flat tubes 1 is depicted by the thick horizontal lines located between the manifolds 1100, 1200. The stack of standard tubes 1500 is depicted by thin horizontal lines stacked subsequently to the thick ones. This allows the heat exchanger to better withstand so- called thermal shock when the hot fluid egresses to the heat exchanger 1000 via inlet 1300.

The heat exchanger 1000 may comprise only flat tubes 1 stacked between the manifolds 1100, 1200.

The heat exchanger 100 may also comprise fins interlaced between any of the flat tubes 1 or secondary tubes 103, depending on the presence of the latter. The fins are not depicted in detail for the sake of clarity of the drawings.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A flat tube (1) for a heat exchanger for a flow of a fluid therein, the flat tube (1) having open ends on both sides and extending along its longitudinal axis (L1), the flat tube (1) further comprising: a first wall (3), a second wall (4) parallel to the first wall (3), said walls (3, 4) being substantially flat, two complementary side wall portions (6) joining said first and second walls (3, 4) together to form a hollow profile of the tube (1), wherein the flat tube (1) further comprises a first region (100), called nominal region (100) comprising a first thickness of the wall (T1), and at least one second region (200), called thin region (200) comprising a second thickness of the wall (T2), wherein the regions (100, 200) extend along the longitudinal axis (L1) and the thicknesses (T1, T1) are measured perpendicularly to the longitudinal axis (L1).

2. The flat tube (1) according to claim 1, wherein each of the walls (3, 4, 6) comprises first, second and side inner face (3a, 4a, 6a), and a first, second and side outer face (3b, 4b, 6b) respectively, wherein the inner faces are associated with a hollow space of the tube (1) and the outer faces (3b, 4b, 6b) are associated with an outer space of the tube (1).

3. The flat tube (1) according to claim 1, wherein the second thickness (T2) is smaller than the first thickness (T2), wherein the thickness is measured as the distance between the respective inner faces (3a, 4a, 6a) and outer faces (3b, 4b, 6a) and wherein the distance between the first and second outer faces (3b, 4b) remains the same along the longitudinal axis (L1).

4. The flat tube (1) according to any of the preceding claims, wherein the second region (200) extends from the open end of the tube (1) and the first region (100) extends form the opposite open end of the tube (1), the regions (100, 200) extending along the longitudinal axis (L1).

5. The flat tube (1) according to any of claims 1-3, wherein a portion of the first region (100) extends from one open end of the tube (1), the other portion of the first region (100) extends form the other open end of the tube (1) and the second region (200) is located between said first regions (100).

6. The flat tube (1) according to any of claims 1-3, wherein a portion of the second region (200) extends from one open end of the tube (1), the other portion of the second region (200) extends form the other open end of the tube (1) and the first region (100) is located between said second regions (200).

7. The flat tube (1) according to claim 6, wherein the total surface of the first region (100) is greater than the total surface of the second region (200).

8. The flat tube (1) according to any of claims 1-3 wherein a portion of the first region (100) extends from one open end of the tube (1), the other portion of the first region (100) extends form the other open end of the tube (1), wherein said tube (1) comprises at least two second regions (200) arranged alternately with first region (100).

9. The flat tube (1) according to any of claims 1-3 wherein a portion of the second region (200) extends from one open end of the tube (1), the other portion of the second region (200) extends form the other open end of the tube (1), wherein said tube (1) comprises at least two first regions (100) arranged alternately with second region (200).

10. The flat tube (1) according to any of the preceding claims, wherein the total surface of the first region (100) is greater than the total surface of the second region (200).

11. The flat tube (1) according to any of claims 1-10, wherein the first region (100) is greater than the second region (200).

12. A heat exchanger (1000) for a heat exchange between the first fluid and the second fluid comprising at least one flat tube (1) according to any of the preceding claims.

13. The heat exchanger (1000) according to claim 12, wherein the heat exchanger (1000) further comprises a first manifold (1100) and a second manifold (1200), the manifolds (1100, 1200) being configured to receive at least one flat tube (1), the inlet (1300) allowing ingress of the first fluid into the heat exchanger (1000), and an outlet (1400) allowing egress of the first fluid from the heat exchanger (1000).

14. The heat exchanger (1000) according to claim 13, wherein the heat exchanger (1000) further comprises standard tubes (1500) having fixed wall thickness.

15. The heat exchanger (1000) according to claim 14, wherein the plurality of flat tubes (1) and standard tubes (1500) are stacked together between manifolds (1100, 1200), so that the flat tubes (1) are located closer to the inlet (1300) than the standard tubes (1500).
